# EUROPEAN PATENT SPECIFICATION

(11) **EP 3 896 303 B1**
(45) Date of publication and mention of the grant of the patent: **01.11.2023**
(21) Application number: 21168800.7
(22) Date of filing: 16.04.2021
(51) Int. Cl.: F16D 1/08, B65H 16/06, F16D 1/10

(54) **A SUPPORTING AND CLAMPING DEVICE FOR THE SHAFT OF A REEL**
STÜTZ- UND KLEMMVORRICHTUNG FÜR DIE WELLE EINER TROMMEL
DISPOSITIF DE SUPPORT ET DE SERRAGE DE L'ARBRE D'UN ENROULEUR

(30) Priority: 16.04.2020 IT 202000008122
(43) Date of publication of application: 20.10.2021
(73) Proprietor: Scaravella, Carlo, 29121 Piacenza (IT)
(72) Inventor: Scaravella, Carlo, 29121 Piacenza (IT)
(74) Representative: Fisauli, Beatrice A. M.

(56) References cited:
- EP-A2- 1 149 786
- DE-A1- 2 852 510

## Description

The present invention relates to a supporting and clamping device for the shaft of a reel, comprising an insertion seat for a terminal of said shaft of the reel.

The insertion seat comprises abutment surfaces in contact with at least a part of the outer wall of the terminal of the shaft, configured so as to rotate said shaft and the supporting device solidly.

The supporting and clamping device can be connected to motor means adapted to rotate this supporting device about its axis, or can be driven in rotation by the shaft. Typically, in a machine only one of the two supports at the ends of the reel is connected to motor means while the other is idle and driven.

The above description is the common configuration of supporting devices present in pneumatic grippers known in the state of the art, in particular for supporting and clamping the shaft of a reel of printing machines or laminating machines, provided with pneumatic systems adapted to control opening of the gripper and which have means adapted to maintain the gripper clamped on the shaft of the reel during unwinding thereof.

The supporting and clamping device of the present invention is a component of these grippers and comprises the insertion seat, in which the terminal of the shaft of the reel is housed.

To simplify reading, the term "supporting device" has been used alone hereunder to indicate, more generally, a supporting and clamping device. [insert page 1a here]

An example of these grippers and of their operation is described in the Italian patent application no. 102003901169855 (or ITPC200300053) in the name of TLK SRL (publication date: 13.06.2005).

These grippers are widely used and do not have any particular inefficiencies from the viewpoint of clamping the shaft of the reel and from the viewpoint of operating efficiency.

EP 1149 786 A2 discloses an example of a supporting and clamping device for the shaft of a reel. The device comprises an insertion seat adapted to house a terminal of the shaft of said reel. The insertion seat comprises abutment surfaces against which at least part of the outer wall of said terminal is configurated so as to rotate the shaft and the supporting device solidly.

Nonetheless, it has been found that the surfaces of the insertion seat that are in contact with the outer walls of the shaft, in particular with the polygonal portion of the shaft that allows it to be driven in rotation, are subject to wear due to the stresses caused by rubbing between the parts during rotation of the supporting device.

It is evident how this wear gradually causes increasingly greater clearances and backlashes in the relative movements between the shaft of the reel and the seat of the supporting device, which compromise operation of the whole gripper, limiting its clamping force and efficiency.

Therefore, to prevent these malfunctions it is normal practice to periodically replace the whole supporting device, or at least the body that incorporates the seat, so as to operate with a device having integral abutment walls.

However, the procedure to replace or repair the supporting device requires disassembly of the whole gripper body and has various drawbacks.

Firstly, as is evident from the patent application no. 102003901169855, the supporting device is a part that requires particularly complex machining to be produced and comprises various parts that perform different functions inside the grippers known in the state of the art.

Moreover, the procedure to replace the supporting device requires specific operations that must be carried out by a skilled operator.

Therefore, besides the costs required to purchase the part and for the labour for its replacement, this procedure also has indirect costs due to the necessary downtime for the operation by the service technician.

Therefore, there is a need that is not satisfied by the devices known in the state of the art to produce a supporting and clamping device of shafts of reels that solves the problems set forth above.

The object of the present invention is therefore to provide a supporting device for a shaft of a reel that is less expensive and simpler to maintain.

In particular, the object of the present invention is to provide a supporting device that can be repaired, following normal wear, quickly even by an unskilled technician.

The present invention achieves the aforesaid objects by producing a supporting device for the shaft of a reel that comprises an insertion seat for a terminal of said shaft, wherein said insertion seat comprises abutment surfaces against which at least a part of the outer wall of said terminal can abut, said abutment surfaces being configured so as to rotate the shaft and the supporting device solidly.

According to the invention, said insertion seat has a removable insert fastenable to the inner walls of said insertion seat.

In particular, the insert has an outer face configured to be fastened to the inner wall of the insertion seat and an inner face opposite said outer face, comprising the abutment surfaces or on which said abutment surfaces are made.

Therefore a solution is obtained that provides an insert that comprises the whole of the abutment surfaces, i.e., the part of the gripper subject to wear.

This part, thanks to the possibility of removing the insert from the insertion seat, can be easily replaced, without requiring to disassemble the whole gripper body and the operation of skilled service technicians.

According to a possible embodiment, which allows the insert to be adapted to the shape of the terminals of the shafts of reels known in the state of the art, the outer face has a semi-circular shaped profile, while said inner face has a polygonal shaped profile.

As will be apparent from the illustration of some examples of embodiment, the outer face preferably has a profile of a shape complementary to the profile of the inner walls of the insertion seat.

Naturally, the possibility of removing the insert requires the insert to be stably fastened to the walls of the insertion seat. This fastening must be removable, but at the same time guarantee stability, in view of the considerable loads to which the support is subjected (several tens of kg) and the high rotation speeds to which the reels are subjected during operation of the related printing or laminating machines.

For this reason, the insert is fastened to the walls of the insertion seat to allow its removal and is anchored to the walls of the insertion seat to limit mechanical stresses.

Consequently, according to a possible embodiment, the outer face of the insert has anchoring means to the supporting device.

These anchoring means allow the insert to be constrained along an axial direction of the body of the supporting device, i.e., to support the related mechanical stresses that develop along this direction. Moreover, these anchoring means allow rotation of the insert to be blocked relative to the body of the supporting device, i.e., to support the stresses due to torques.

According to a first embodiment, the anchoring means comprise one or more protruding profiles provided on the outer face of the insert and arranged transversely relative to the axis of rotation of said supporting device.

These protruding profiles are configured so as to coact with one or more corresponding grooves made on the inner wall of the insertion seat.

The presence of one or more protruding profiles gives the device of the present invention high reliability and resistance to the considerable stresses in axial direction; the transverse arrangement of these profiles and grooves ensure that the insert engages with the insertion seat regardless of the forces acting in the direction of the axis of rotation of the supporting device.

To this end, said protruding profiles preferably extend for the whole of the outer face of the insert.

Besides the protruding profiles, according to an aspect of the invention, the anchoring means comprise at least one abutment element, also provided on the outer face of the insert, configured to coact with a corresponding anchoring seat made in the thickness of the inner wall of the insertion seat.

This abutment allows the creation of an engaging element that engages inside the inner wall of the insertion seat, so as to ensure that the insert is resistant to the torques of the rotation motion, both during start up and braking, and following sudden stops in the rotation.

In order to improve assembly of the various components of the device of the present invention, the abutment element consists of an elongated element, arranged with its major axis parallel to the axis of rotation of the supporting device. Said abutment element can be removably inserted inside a specific housing seat made in the thickness of the outer face of the insert.

Said abutment element is, for example, a mechanical member of "key" type.

As described above, the anchoring means allow the mechanical stresses between the insert and the insertion seat to be limited, while removable fastening means are provided to allow the insert to be removed from and inserted into the insertion seat.

Moreover, according to an improvement aimed at facilitating insertion of the terminal of the shaft of the reel inside of the insertion seat, the inner face has a recess preferably extending for the same depth in axial direction of the abutment surfaces, and arranged at the corner between two faces of the polygonal seat.

Finally, it is specified that the material used to make the insert has features of high mechanical strength, compatible with the high stresses to which the device is subjected, but also suitable to limit the wear of this part following vibrations during operation and rubbing during mounting or removal of the reel.

These and other features and advantages of the present invention will be more apparent from the following description of some examples of embodiment illustrated in the accompanying drawings, wherein:
- Figs. 1 and 2 illustrate two perspective views of a possible embodiment of the supporting device according to the present invention;
- Figs. 3 and 4 illustrate two views of the embodiment of Figs. 1 and 2 according to a plane perpendicular to the longitudinal axis of the supporting device;

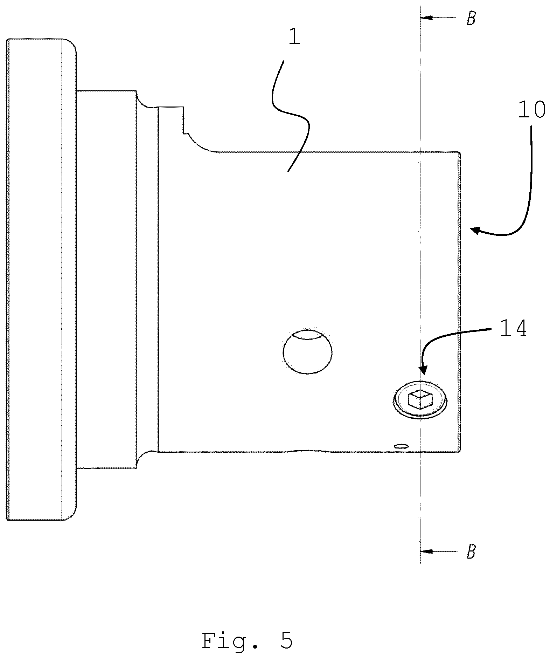

- Figs. 5 and 6 illustrate two views of the embodiment of Figs. 1 and 2 according to a plane parallel to the longitudinal axis of the device of the present invention.

It is specified that the figures accompanying the present patent application only illustrate a possible embodiment of the supporting and clamping device for the shaft of a reel according to the present invention, for a better understanding of the advantages and features described.

Therefore, this embodiment must be understood to be purely for illustrative purposes and does not limit the inventive concept of the present invention, namely, to produce a device that, in case of wear of the components, is easily replaceable, through a quick and cost-effective procedure.

With particular reference to the figures, the supporting and clamping device 1 is used to support the shafts of reels, in particular for printing machines or similar, such as laminating machines.

The terminals of the shafts of the reels are inserted inside the supporting device in the direction of the longitudinal axis A of the supporting device, inside a specific insertion seat 10.

The supporting device 1 is adapted to be mounted in the machinery, connected to motor means that rotate it or idle, so as to rotate about its longitudinal axis A.

The terminal 3 of the shaft generally comprises at least a portion with a polygonal section 3a, typically a square section, adapted to couple with the abutment surfaces 21 resting against them.

Once the terminal 3 of the shaft has been inserted inside the insertion seat 10, the shaft is driven in rotation, due to the presence of the abutment surfaces 21 that are in contact with the polygonal outer walls of the portion 3a of the terminal 3 of the shaft, if the support is motorized. Otherwise, if said support is mounted freely or idle, it is said terminal of the shaft 3 that drives the supporting device in rotation.

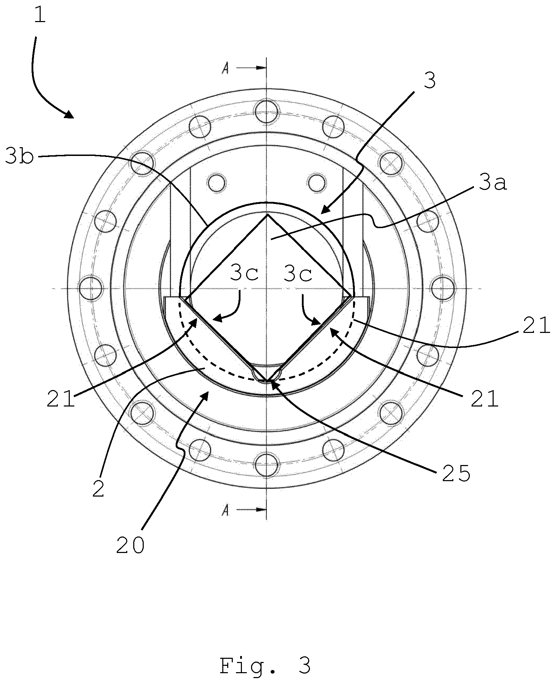

Fig. 3 illustrates a view perpendicular to the longitudinal axis A, wherein the terminal 3 of the shaft (illustrated schematically in the figure) is inserted inside the insertion seat 10 and with the outer surfaces 3c of the polygonal portion 3a in contact with the abutment walls 21.

Therefore, inside the insertion seat 10, the terminal 3 of the shaft is housed and engaged by form-fitting.

The terminal 3 of the shaft also has a cylindrical portion 3b, which extends beyond the polygonal portion, adapted to coact with a closing element, not illustrated in the figures.

Said cylindrical portion 3b is housed in a semi-circular seat 26 also made in the inner wall of the insert 2.

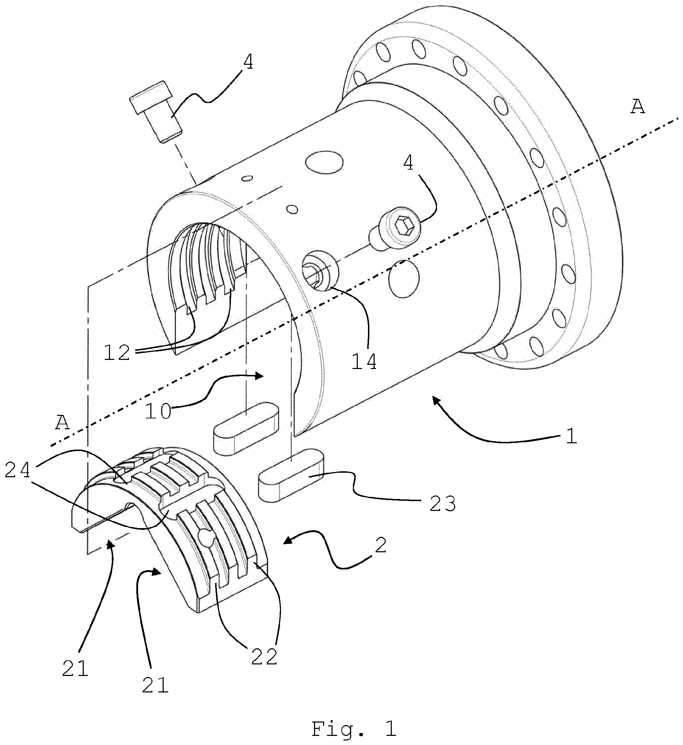

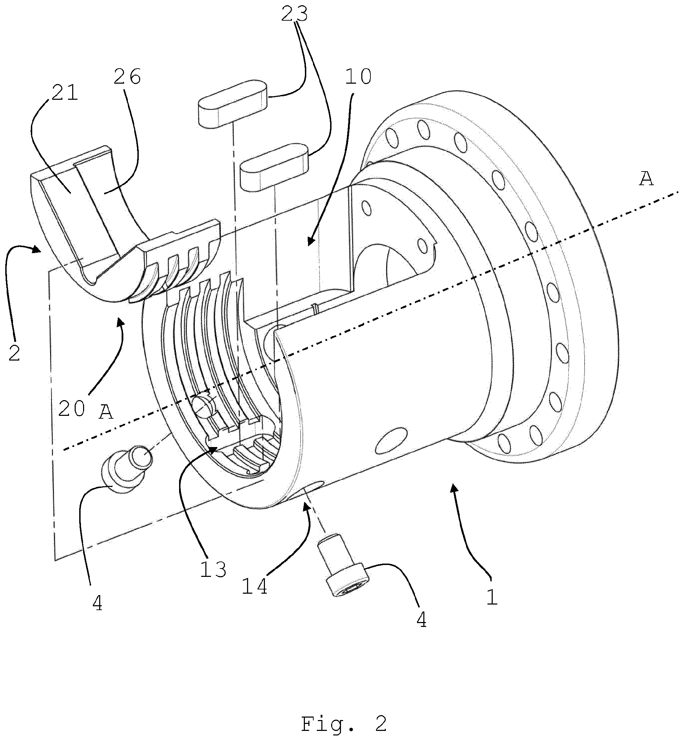

As illustrated in Figs. 1 and 2, the insertion seat 10 has a removable insert 2 fastenable to the inner walls of the insertion seat 10.

The insert 2 has an outer face 20 configured to be coupled to the inner wall of the insertion seat 10 and an inner face opposite said outer face 20. The inner face has a polygonal shaped profile and comprises the abutment walls 21.

The insertion seat 10 has a circular section, so that the insert 2, in order to adhere completely to the inner walls of the insertion chamber 10, has the outer face 20 with a semi-circular shaped profile.

According to a preferred variant, the abutment walls 21 consist of two flat sloping surfaces that form between them an angle equivalent to the angle formed by the surfaces of the polygonal portion 3a of the terminal 3, typical of around 90°.

Figs. 1 and 2 illustrate two exploded views in which the insert 2 is outside the insertion seat 10, while the remaining figures illustrate the insert 2 coupled to said insertion seat 10.

According to the variant illustrated in the figures, anchoring means and fastening means are provided to obtain coupling of the insert 2 with the insertion seat 10.

The outer face 20 of the insert 2 has two different types of anchoring means.

Firstly, the outer face 20 comprises a plurality of protruding profiles 22 arranged transversely relative to the longitudinal axis A, i.e., the axis of rotation of the supporting device 1.

These protruding profiles 22 extend along the majority of the surface of the outer face 20, with a trend oriented on perpendicular planes relative to the longitudinal axis A.

Moreover, the protruding profiles 22 engage inside corresponding grooves 12 made in the thickness of the inner wall of the insertion seat 10.

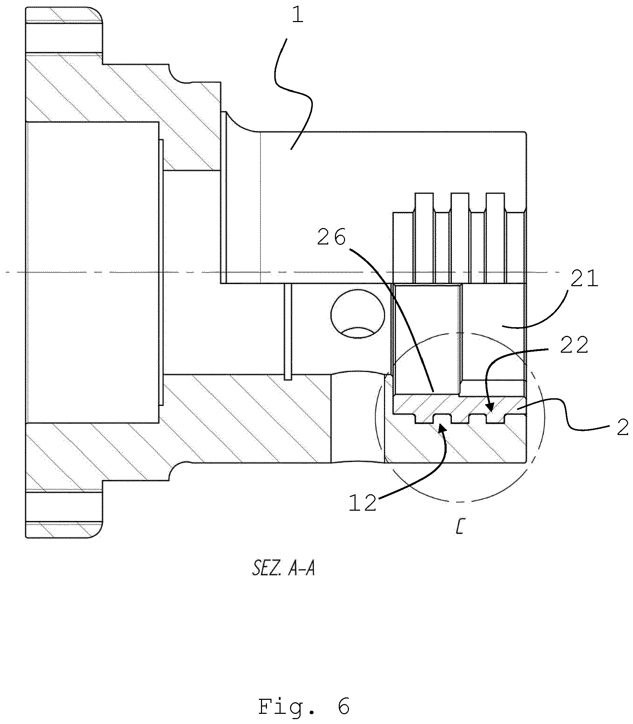

Fig. 6 illustrates in particular this engaged condition, through a section of the supporting device 1, wherein the insert 2 is inserted inside the insertion seat 10, with the protruding profiles 22 engaged inside the grooves 12.

This engaged condition prevents relative movements between the insert 2 and the body of the supporting device 1 along the longitudinal axis A.

As shown in Figs. 1 and 2, to eliminate relative movements between the insert 2 and the body of the device 1, two elongated elements 23 are provided, which can engage both with the insert 2 and with the body of the device 1.

In fact, the insert 2 has a housing seat 24 for each elongated element 23, just as the inner surface of the insertion seat 10 has an anchoring seat 13 for each elongated element 23.

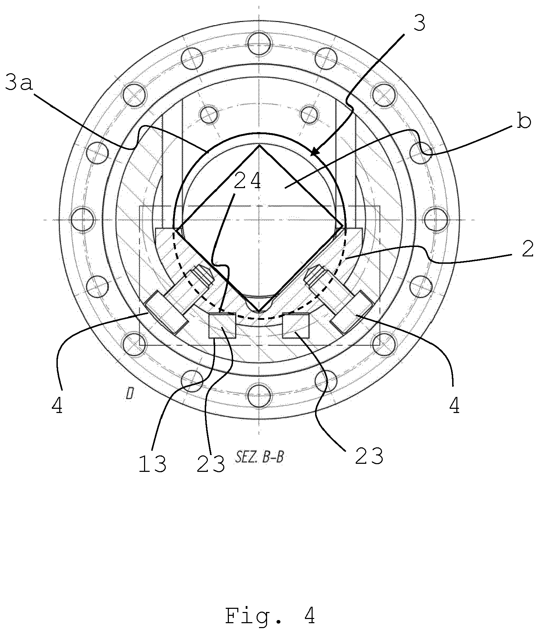

As illustrated in Fig. 4, in the condition in which the insert 2 and the body of the device 1 are coupled, the housing seats 24 are located at the anchoring seats 13, so as to house the elongated elements 23 in the space thus defined.

It is evident how these elongated elements 23 can have any shape, provided that they create an abutment that prevents a relative movement between the insert 2 and the body of the device 1, in the direction of rotation of the same device.

In addition to the anchoring means, fastening means of the insert 2 to the body of the device 1 are provided.

Fastening of the insert 2 is naturally removable, as the insert 2 must be able to be removed for replacement in case of wear of the abutment walls 21.

According to the variant illustrated in the figures, the fastening devices consist of clamping screws 4, preferably at least two or more.

As illustrated in Fig. 1, the clamping screws 4 are inserted radially relative to the body of the device 1, inside specific seats 14 made in the thickness of the body of the device 1.

The seats 14 consist of through holes, which allow the threaded end of each clamping screw 4 to engage inside specific threaded holes provided on the outer face 20 of the insert 2, as illustrated in Fig. 4.

The insert 2 also has, in the area in which the abutment surfaces 21 converge, a recess 25 arranged along the whole of the depth of said abutment surfaces 21.

The closing element 5, not shown in the figure, in operating condition is placed close to or in contact with the outer surface of the cylindrical portion 3b of the terminal 3 to prevent the terminal from being able to escape from the housing seat 10.

Once the insert 2 has been inserted in position in the insertion seat 10, it is possible to couple the closing element 5 to the walls of the body of the device 1 by means of screws.

To remove and replace the insert 2, it is sufficient to decouple the closing element 5, if mounted on the device, unscrew the clamping screws 4 and release the insert 2.

While the invention is susceptible to various modifications and alternative constructions within the scope of the present claims, some preferred embodiments have been shown in the drawings and described in detail.

## Claims

1. A supporting and clamping device for the shaft of a reel, comprising an insertion seat (10) adapted to house a terminal (3) of the shaft of said reel, the insertion seat (10) comprising abutment surfaces (21) against which at least a part of the outer wall of said terminal (3) can abut, said abutment surfaces (21) being configured so as to rotate the shaft and the supporting device (1) solidly, **characterized in that** said insertion seat (10) has a removable insert (2) fastenable to the inner walls of said insertion seat (10), the insert (2) having an outer face (20) configured to be fastened to the inner wall of said insertion seat (10) and an inner face, opposite said outer face (20), comprising said abutment surfaces (21).

2. The device according to claim 1, wherein said outer face (20) has a semi-circular shaped profile, while said inner face has a polygonal shaped profile.

3. The device according to claim 1 or 2, wherein said outer face (20) has anchoring means (12, 22, 23) of said insert (2) to said supporting device (1).

4. The device according to claim 3, wherein said anchoring means comprise one or more protruding profiles (22) provided on said outer face (20) and arranged transversely relative to the axis of rotation (A) of said supporting device (1), configured so as to coact with corresponding grooves (12) made on the inner wall of said insertion seat (10).

5. The device according to claim 3 or 4, wherein said anchoring means comprise at least one boss (23) provided on said outer face (20), said boss being configured to coact with a corresponding anchoring seat (13) made in the thickness of the inner wall of said insertion seat (10).

6. The device according to claim 5, wherein said boss comprises an elongated element (23) that can be removably inserted inside a specific housing seat (24) made in the thickness of said outer face (20).

7. The device according to one or more of the preceding claims, comprising removable fastening means (4) of said insert (2) on said supporting device (1).

8. The device according to one or more of the preceding claims, wherein said inner face of the insert (2) has a recess (25) arranged along the whole of the depth of the inner face.

## Patentansprüche

1. Eine Stütz- und Klemmvorrichtung für die Welle einer Rolle, die einen Einfügungssitz (10) umfasst, der geeignet ist, um einen Anschluss (3) der Welle der besagten Rolle aufzunehmen, wobei der Einfügungssitz (10) Anschlagflächen (21) umfasst, gegen die mindestens ein Teil der Außenwand des besagten Anschlusses (3) anschlagen kann, wobei die besagten Anschlagflächen (21) so konfiguriert sind, dass die Welle und die Stützvorrichtung (1) fest gedreht werden, **dadurch gekennzeichnet, dass** der besagte Einfügungssitz (10) einen abnehmbaren Einsatz (2) aufweist, der an den Innenwänden des besagten Einfügungssitzes (10) befestigt werden kann, wobei der Einsatz (2) eine Außenfläche (20) aufweist, die konfiguriert ist, um an der Innenwand des besagten Einfügungssitzes (10) befestigt zu werden, und eine Innenfläche aufweist, die der besagten Außenfläche (20) gegenüberliegt und die die besagten Anlageflächen (21) umfasst.

2. Die Vorrichtung gemäß Anspruch 1, wobei die besagte Außenfläche (20) ein halbkreisförmig geformtes Profil aufweist, während die besagte Innenfläche ein polygonal geformtes Profil aufweist.

3. Die Vorrichtung gemäß Anspruch 1 oder 2, wobei die besagte Außenfläche (20) Verankerungsmittel (12, 22, 23) des besagten Einsatzes (2) an die besagte Stützvorrichtung (1) aufweist.

4. Die Vorrichtung gemäß Anspruch 3, wobei die besagten Verankerungsmittel ein oder mehrere vorstehende Profile (22) umfassen, die auf der besagten Außenfläche (20) vorgesehen und quer in Bezug auf die Drehachse (A) der besagten Stützvorrichtung (1) angeordnet sind, so konfiguriert, um mit entsprechenden Nuten (12) zusammenzuwirken, die auf der Innenwand des besagten Einfügungssitzes (10) ausgebildet sind.

5. Die Vorrichtung gemäß Anspruch 3 oder 4, wobei die besagten Verankerungsmittel mindestens einen Vorsprung (23) umfassen, der auf der besagten Außenfläche (20) vorgesehen ist, wobei der besagte Vorsprung gestaltet ist, um mit einem entsprechenden Verankerungssitz (13) zusammenzuwirken, der in der Dicke der Innenwand des besagten Einfügungssitzes (10) ausgebildet ist.

6. Die Vorrichtung gemäß Anspruch 5, wobei der besagte Vorsprung ein längliches Element (23) umfasst, das herausnehmbar in einem speziellen Gehäusesitz (24) eingesetzt werden kann, der in der Dicke der besagten Außenfläche (20) ausgebildet ist.

7. Die Vorrichtung gemäß einem oder mehreren der vorhergehenden Ansprüche, umfassend entfernbare Befestigungsmittel (4) des besagten Einsatzes (2) auf der besagten Stützvorrichtung (1).

8. Die Vorrichtung gemäß einem oder mehreren der vorhergehenden Ansprüche, wobei die besagte Innenfläche des Einsatzes (2) eine Auskehlung (25) aufweist, die längs der gesamten Tiefe der Innenfläche angeordnet ist,

## Revendications

1. Dispositif de support et de serrage pour l'arbre d'un enrouleur, comprenant un siège d'insertion (10) adapté pour loger un embout (3) de l'arbre dudit enrouleur, le siège d'insertion (10) comprenant des surfaces de butée (21) contre lesquelles au moins une partie de la paroi extérieure dudit embout (3) peut venir en appui, lesdites surfaces de butée (21) étant configurées de manière à faire pivoter solidement l'arbre et le dispositif de support (1), **caractérisé par le fait que** ledit siège d'insertion (10) comporte un insert amovible (2) pouvant être fixé aux parois internes dudit siège d'insertion (10), l'insert (2) présentant une face externe (20) configurée pour être fixée à la paroi interne dudit siège d'insertion (10) et une face interne, opposée à ladite face externe (20), comportant lesdites surfaces de butée (21).

2. Dispositif selon la revendication 1, où ladite face externe (20) présente un profil de forme semi-circulaire, tandis que ladite face interne présente un profil de forme polygonale.

3. Dispositif selon la revendication 1 ou 2, où ladite face externe (20) présente des moyens d'ancrage (12, 22, 23) dudit insert (2) audit dispositif de support (1).

4. Dispositif selon la revendication 3, où lesdits moyens d'ancrage comprennent un ou plusieurs profils saillants (22) prévus sur ladite face extérieure (20) et disposés transversalement par rapport à l'axe de rotation (A) dudit dispositif de support (1), configurés de manière à coïncider avec des rainures correspondantes (12) réalisées sur la paroi intérieure dudit siège d'insertion (10).

5. Dispositif selon la revendication 3 ou 4, où lesdits moyens d'ancrage comprennent au moins un bossage (23) prévu sur ladite face externe (20), ledit bossage étant configuré pour collabore avec un siège d'ancrage correspondant (13) réalisé dans l'épaisseur de la paroi interne dudit siège d'insertion (10).

6. Dispositif selon la revendication 5, dans lequel ledit bossage comprend un élément allongé (23) pouvant être inséré de manière amovible à l'intérieur d'un siège de logement spécifique (24) réalisé dans l'épaisseur de ladite face externe (20).

7. Dispositif selon l'une ou plusieurs des revendications précédentes, comprenant des moyens de fixation amovibles (4) dudit insert (2) sur ledit dispositif de support (1).

8. Dispositif selon l'une ou plusieurs des revendications précédentes, dans lequel ladite face interne de l'insert (2) présente un renfoncement (25) agencé sur toute la profondeur de la face interne.
